# EUROPEAN PATENT APPLICATION

(11) **EP 2 180 756 A1**
(43) Date of publication of application: **28.04.2010**
(21) Application number: 08791628.4
(22) Date of filing: 25.07.2008
(51) Int. Cl.: H04W 88/02, H04W 84/00, H04W 16/00, H04W 4/00

(54) **MOBILE COMMUNICATION SYSTEM, UPPER NODE DEVICE, BASE STATION DEVICE, MOBILE STATION DEVICE, AND BASE STATION STATUS CONTROL METHOD**

(30) Priority: 13.08.2007 JP 2007211094
(71) Applicant: NTT DoCoMo, Inc., Chiyoda-ku Tokyo 100-6150 (JP)
(72) Inventor: ISHII, Akira, Tokyo 100-6150 (JP); MORI, Shinichi, Tokyo 100-6150 (JP); IWAMURA, Mikio, Tokyo 100-6150 (JP)
(74) Representative: HOFFMANN EITLE
(86) International application number: PCT/JP2008/063384
(87) International publication number: WO 2009/022533

(57) **Abstract**

A mobile communications system is disclosed. The mobile communications system includes a unit which is provided at an upper-layer node apparatus and which obtains location information of a base station apparatus and one or more mobile station apparatuses; a unit which is provided at the upper-layer node apparatus and which checks whether the mobile station apparatus is authorized to connect to the base station apparatus; a unit which is provided at the upper-layer node apparatus and which calculates a proximity of the base station apparatus and the mobile station apparatus based on the location information of the base station apparatus and the mobile station apparatus; and a unit which is provided at the upper-layer node apparatus and which moves the base station apparatus to a service status when the base station apparatus and the mobile station apparatus are in proximity and moves the base station apparatus to a radio unit stop status when all the mobile station apparatuses are not in proximity with the base station apparatus.

## Description

### BACKGROUND OF THE INVENTION

### 1. Field of the Invention

The present invention relates to mobile communications systems, upper-layer node apparatuses, base station apparatuses, mobile station apparatuses, and base station status control methods.

### 2. Description of the Related Art

After a service is initiated by a network manager, a base station for public communications in a mobile communications system regularly provides the service to respond to a connection request from a user that is made irregularly.

For example, tasks for initiating by the network manager are performed as follows:
(1) The base station is installed and various line connections are made, after which the power is turned on and circuits to an upper-layer node are opened to traffic.
(2) Various parameter settings are made on the base station via a network or by direct manual entry.

After the settings are incorporated to initiate the base station service, the service continues as much as possible without interruption except when re-initiating is needed due to a failure, a change in an apparatus configuration, etc. Moreover, when dismantling the base station, the base station service is terminated and the power is turned off.

What is described above is an operation for the base station for public communications, but a basically similar operation is expected also for a base station to be installed in a small area such as a home, which base station is called a home base station (HNB: Home eNodeB, see Non-patent document 1).

Non-patent document 1: 3GPP TSG RAN #35 RP-070209 Lemesos, Cyprus, 6-9 March 2007 (http://www.3gpp.org/ftp/tsg_ran/TSG_RAN/TSGR_35/Docs/ )

### SUMMARY OF THE INVENTION

### [Problem(s) to be solved by the Invention]

As described above, the conventional base station provides the service regularly. Thus, there are pointed out the following problems with respect to the home base station:
(1) For the base station, what are being considered are operations having no conventional limitation on connectable users, and operations restricting the connecting user only to a CSG (Closed Subscriber Group). Then, a transmission from a home base station with no neighboring CSG user becomes wasted.
(2) Such a status as described above causes not only wasted power, but also interference with other cells due to a common control channel transmitted from the base station when the CSG user is not connected. The interference causes degradation in communications quality for a non-CSG user. Moreover, the interference causes degradation in communications capacity for a base station unrelated to the base station for the CSG as described above.
(3) It is expected that a large number of the base stations for the CSG (for example, one base station per family) will be installed. Thus, the harmful effects as described above become a problem which is large not to be ignored.
   On the other hand, while an operation may be considered such that the user of the base station for the CSG manually initiates and stops the base station, there exist the following problems.
(4) Before initiating the base station, a communications handover being conducted may fail. For example, when moving from a status of communicating outdoors with a base station for public communications to a status of being in a house in which a base station for CSG is installed, a communications handover may fail due to manual initiating of the base station for the CSG being not on time.
(5) Stopping of an apparatus that takes into account other users of the base station (other members of the family) is called for, making the operation more complicated, thereby causing the meaning of the initiating and stopping of the base station to become lost.

In view of the above problems of the prior art, the present invention aims to provide a mobile communications system, an upper-layer node apparatus, a base station apparatus, a mobile station apparatus, and a base station status control method that make it possible to decrease the effect of interference on the surroundings and the power consumption of the apparatuses without troubling an owner or a user of a base station for CSG.

### [Means for solving the Problem]

In order to solve the problems as described above, in one embodiment of the present invention is provided a unit which is provided at an upper-layer node apparatus and which obtains location information of a base station apparatus and one or more mobile station apparatuses; a unit which is provided at the upper-layer node apparatus and which checks whether the mobile station apparatus is authorized to connect to the base station apparatus; a unit which is provided at the upper-layer node apparatus and which calculates a proximity of the base station apparatus and the mobile station apparatus based on the location information of the base station apparatus and the mobile station apparatus; and a unit which is provided at the upper-layer node apparatus and which moves the base station apparatus to a service status when the base station apparatus and the mobile station apparatus are in proximity and moves the base station apparatus to a radio unit stop status when all the mobile station apparatuses are not in proximity with the base station apparatus.

### [Advantage of the Invention]

The disclosed mobile communications system, upper-layer node apparatus, base station apparatus, mobile station apparatus, and base station status control method make it possible to decrease the effect of interference on the surroundings and the power consumption of the apparatuses without troubling an owner or a user of a base station for CSG.

### BRIEF DESCRIPTION OF THE DRAWINGS

FIG. 1 is an exemplary configuration diagram illustrating a mobile communication system according to one embodiment of the present invention;
FIG. 2 is a diagram illustrating statuses of a home base station;
FIG. 3 is a diagram illustrating exemplary configurations of an upper-layer node and a home base station in a first embodiment;
FIG. 4 is a diagram illustrating an exemplary configuration of a mobile station in the first embodiment;
FIG. 5 is a sequence diagram illustrating an exemplary process in the first embodiment;
FIG. 6 is a diagram illustrating exemplary configurations of a mobile station and a home base station in the second embodiment; and
FIG. 7 is a sequence diagram illustrating an exemplary process in the second embodiment.

### DESCRIPTION OF THE PREFERRED EMBODIMENTS

### [Description of Notations]

1 upper-layer node; 121 network interface unit
122 mobile station location information memory unit; 123 home base station location information memory unit; 124 mobile station and home base station-collating database unit; 125 proximity calculating unit; 126 home base station radio unit status instruction generating unit; 2, 2#1 through 2#3 macro base station; 3 home base station; 301 network interface unit; 302 GPS receiver; 303 location information memory unit; 304 radio unit status control unit; 305 unit for receiving from base station; 306 receive quality measuring unit; 321 network interface unit; 322 GPS receiver; 323 location information memory unit; 324 unit for transmitting to mobile station; 325 radio unit status control unit; 326 unit for receiving from base station; 327 receive quality measuring unit; 4, 4#1-4#3 macro cell; 5 home cell; 6, 6#1-6#3 location registration area; 7, 7#1-7#3 mobile station; 701 unit for receiving from base station; 702 HNB/MNB/TA-collating database unit; 703 positioning unit; 704 GPS receiver; 705 location information memory unit; 706 identifier memory unit; 707 unit for transmitting to base station; 721 unit for receiving from base station; 722 HNB/MNB/TA-collating database unit; 723 positioning unit; 724 GPS receiver; 725 location information memory unit; 726 home base station location information memory unit; 727 identifier memory unit; 728 proximity calculating unit; 729 unit for transmitting to base station

### [Best Mode of Carrying Out the Invention]

A mobile communications system in one embodiment of the present invention includes: a unit which is provided at an upper-layer node apparatus and which obtains location information of a base station apparatus and one or more mobile station apparatuses; a unit which is provided at the upper-layer node apparatus and which checks whether the mobile station apparatus is authorized to connect to the base station apparatus; a unit which is provided at the upper-layer node apparatus and which calculates a proximity of the base station apparatus and the mobile station apparatus based on the location information of the base station apparatus and the mobile station apparatus; and a unit which is provided at the upper-layer node apparatus and which moves the base station apparatus to a service status when the base station apparatus and the mobile station apparatus are in proximity and moves the base station apparatus to a radio unit stop status when all the mobile station apparatuses are not in proximity with the base station apparatus.

An upper-layer node apparatus in one embodiment of the present invention includes: a unit which obtains location information of a base station apparatus and location information of one or more mobile station apparatuses; a unit which checks whether the mobile station apparatus is authorized to connect to the base station apparatus; a unit which calculates a proximity of the base station apparatus and the mobile station apparatus based on the location information; and a unit which moves the base station apparatus to a service status when the base station apparatus and the mobile station apparatus are in proximity and moves the base station apparatus to a radio unit stop status when all the mobile station apparatuses are not in proximity with the base station apparatus.

A base station apparatus in one embodiment of the present invention includes: a unit which obtains location information of an own apparatus; a unit which transmits an identifier and the location information of the own apparatus to an upper-layer node apparatus; and a unit which moves the own apparatus between a service status and a radio unit stop status in response to an instruction from the upper-layer node apparatus.

A mobile station apparatus in one embodiment of the present invention includes: a unit which obtains location information of an own apparatus; a unit which, when the own apparatus enters a location registration area associated with a specific base station apparatus the mobile station apparatus is authorized to connect to or an area covered by a base station apparatus associated with the specific base station apparatus the mobile station apparatus is authorized to connect to, initiates the unit which obtains the location information; and a unit which transmits an identifier and the location information of the own apparatus to the base station apparatus.

A mobile communications system in a further embodiment of the present invention includes: a unit which is provided at one or more mobile station apparatuses and which obtains location information of an own apparatus and a base station apparatus; a unit which is provided at the mobile station apparatus and which calculates a proximity of the base station apparatus and the mobile station apparatus based on the location information; a unit which is provided at the mobile station apparatus and which transmits the proximity to the base station apparatus; and a unit which is provided at the base station apparatus and which moves the own apparatus to a service status when the own apparatus and the mobile station apparatus are in proximity and moves a radio unit of the own apparatus to a stop status when all of the mobile station apparatuses authorized to connect to the own apparatus are not in proximity with the own apparatus.

A mobile station apparatus in a further embodiment of the present invention includes: a unit which obtains location information of an own apparatus and a specific base station apparatus the mobile station apparatus is authorized to connect to; a unit which calculates a proximity of the base station apparatus and the own apparatus based on the location information; and a unit which is provided at the mobile station apparatus and which transmits the proximity to the base station apparatus.

Preferably, the mobile station apparatus may be arranged to include a unit which, when the own apparatus enters a location registration area associated with the specific base station apparatus the mobile station is authorized to connect to or an area covered by a base station apparatus associated with the specific base station apparatus the mobile station is authorized to connect to, initiates the unit which obtains the location information.

A base station apparatus in a further embodiment of the present invention includes: a unit which obtains location information of an own apparatus to transmit the obtained location information to one or more mobile station apparatuses; a unit for obtaining a proximity from the mobile station apparatus; and a unit which moves the own apparatus to a service status when the own apparatus and the mobile station apparatus are in proximity and moves a radio unit of the own apparatus to a stop status when all of the mobile station apparatuses authorized to connect to the own apparatus are not in proximity with the own apparatus.

Preferably, the base station apparatus may be arranged to include: a unit which measures a receive quality of a signal from another base station apparatus; and a unit which always sets the own apparatus in a service status when the receive quality is no more than a threshold value.

A method of controlling a base station status in a further embodiment of the present invention includes the steps of: obtaining, at an upper-layer node apparatus, location information of a base station apparatus and one or more mobile station apparatuses; checking, at the upper-layer node apparatus, whether the mobile station apparatus is authorized to connect to the base station apparatus; calculating, at the upper-layer node apparatus, a proximity of the base station apparatus and the mobile station apparatus based on the location information of the base station apparatus and the mobile station apparatus; and at the upper-layer node apparatus, moving the base station apparatus to a service status when the base station apparatus and the mobile station apparatus are in proximity and moving the base station apparatus to a radio unit stop status when all the mobile station apparatuses are not in proximity with the base station apparatus.

A method of controlling base station status in another embodiment of the present invention includes the steps of: obtaining, at one or more mobile station apparatuses, location information of a base station apparatus and an own apparatus; calculating, at the mobile station apparatus, a proximity of the base station apparatus and the mobile station apparatus based on the location information; transmitting, at the mobile station apparatus, the proximity to the base station apparatus; and at the base station apparatus, moving the own apparatus to a service status when the own apparatus and the mobile station apparatus are in proximity and moving a radio unit of the own apparatus to a stop status when all of the mobile station apparatuses authorized to connect to the own apparatus are not in proximity with the own apparatus.

Below, preferred embodiments of the present invention are described.

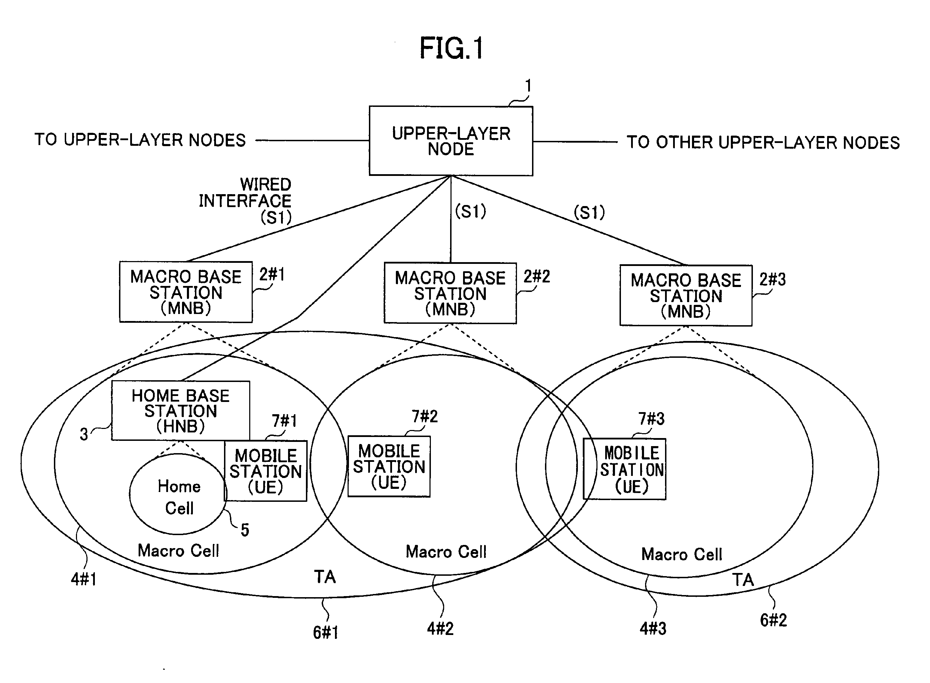

FIG. 1 is a diagram illustrating an exemplary configuration of a mobile communication system according to one embodiment of the present invention.

In FIG. 1, an upper-layer node 1 is connected to multiple surrounding upper-layer nodes by dedicated wired circuits based on a mesh topology.

The upper-layer node 1 is connected to multiple macro base stations (MNBs: Macro eNodeBs) 2#1, 2#2, and 2#3 via wired interfaces (S1) as well as a home base station (HNB: Home eNB) 3 via a wired circuit such as a dedicated circuit of a mobile telephone operator, ADSL (Asymmetric Digital Subscriber Line), or FTTH (Fiber To The Home). Here, the macro base stations 2#1, 2#2, and 2#3 are relatively large base stations installed by a communications operator, while the home base station 3 is a small base station installed by an individual, etc.

An area covered by a sector of the macro base station 2#1 is a macro cell 4#1, an area covered by a sector of the macro base station 2#2 is a macro cell 4#2, and an area covered by a sector of the macro base station 2#3 is a macro cell 4#3. Between neighboring macro cells 4#1 and 4#2, and between neighboring macro cells 4#2 and 4#3, there are provided respective small overlap portions for smoothly conducting a handover. An area covered by the home base station 3 is a home cell 5.

Moreover, a location registration area (TA: tracking area) 6#1 is set surrounding the macro cells 4#1 and 4#2, while a location registration area (TA) 6#2 is set surrounding the macro cell 4#3. The location registration area may be a cell unit or a cluster of them (i.e., a group of multiple cells). The location registration area, which is a unit for managing an area visited by mobile stations, is managed at an upper layer for the mobile stations communicating with the base station.

The macro cells 4#1, 4#2, and 4#3 are visited by mobile stations (UE: user equipment units) 7#1, 7#2 and 7#3. Here, the mobile station 7#1 captures a common control channel such as a BCH (broadcast channel), etc., from the macro base station 2#1, the mobile station 7#2 captures a common control channel such as a BCH, etc. , from the macro base station 2#2, and the mobile station 7#3 captures a common control channel such as a BCH (broadcast channel), etc., from the macro base station 2#3.

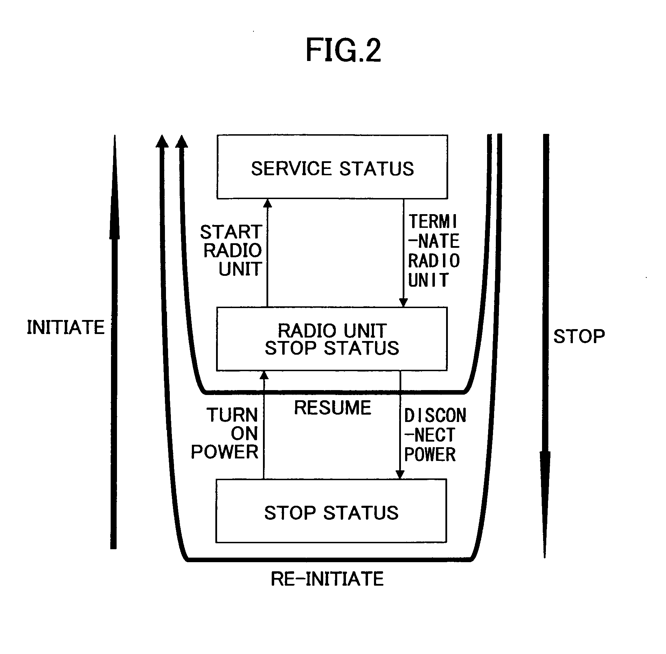

FIG. 2 is a diagram illustrating statuses of the home base station 3, the statuses including: a "stop status", in which the apparatus power is not turned on; "radio unit stop status", in which the apparatus power is turned on, but the radio unit power is stopped; and a "service status", in which the radio unit power is provided. Turning on the power changes the "stop status" to the "radio unit stop status", while disconnecting the power changes the "radio unit stop status" to the "stop status". Starting the radio unit changes the "radio unit stop status" to the "service status", while terminating the radio unit changes the "service status" to the "radio unit stop status".

Moreover, changing the "stop status" to the "service status" is called "initiate", while changing the "service status" to the "stop status" is called "stop". Furthermore, changing the "service status" back to the "service status" via the "stop status" is called "re-initiate", while changing "the service status" to "the radio unit stop status" and then back to "the service state" is called "resume". In the "radio unit stop status", for a radio unit which includes a transmitter and a receiver, the power of only the transmitter may be stopped.

### A first embodiment

A first embodiment shows an upper-level node which has location information of the home base station. An overall configuration of the mobile communications system assumes what is shown in FIG. 1. Moreover, as the macro base station, a general configuration used in this type of mobile communications system is assumed.

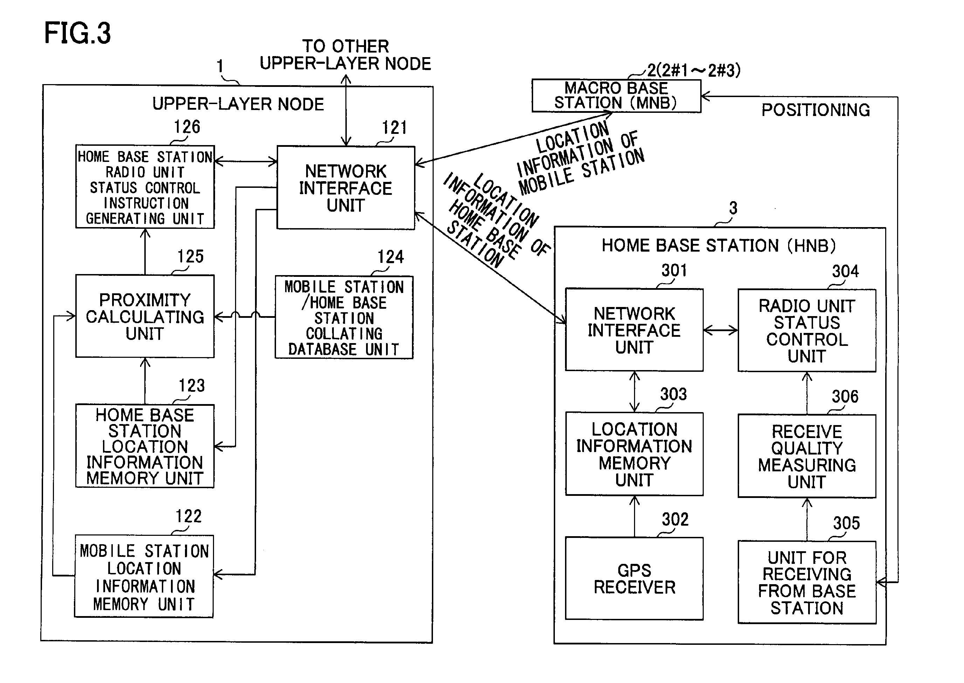

FIG. 3 is a diagram illustrating exemplary configurations of an upper-layer node 1 and a home base station 3 in the first embodiment.

In FIG. 3, the upper-layer node 1 includes a network interface unit 121 for communicating with other upper-layer nodes and underlying base stations (including both a macro base station 2 and a home base station 3) via a wired circuit.

Moreover, the upper-layer node 1 includes a mobile station location information memory unit 122 which obtains, via a network, location information of mobile stations 7 (7#1 through 7#3) that is obtained in a positioning server arranged in the network or the mobile stations 7. The location information of the mobile stations 7 is obtained by means of a general method used in this type of mobile communications system (e.g., a positioning algorithm using an RTT (Round Trip Time) of a signal transmitted by GPS (Global Positioning System) or the base station. Moreover, location information may be obtained from a non-contact type smart card.

Furthermore, the upper-layer node 1 includes a home base station location information memory unit 123 which obtains, via a network, location information of the home base station 3 that is obtained in a positioning server arranged in the home base station 3 or the network, and stores the obtained location information.

Moreover, the upper-layer node 1 includes a mobile station/home base station-collating database unit 124 which collates an identifier of the mobile station 7 with an identifier of the home base station 3. The collating as described above is collating of an identifier of a CSG mobile station 7 that is authorized to connect to the home base station 3 with an identifier of the home base station 3. Multiple identifiers of the mobile stations 7 that are collated with an identifier of one home base station 3 may exist. Moreover, an identifier of one mobile station 7 may be collated with multiple home base stations 3.

Furthermore, the upper-layer node 1 includes a proximity calculating unit 125 which calculates the proximity of the mobile station 7 and the home base station 3 based on a mobile station location received from the mobile station location information memory unit 122 and a home base station location received from the home base station location information memory unit 123. When the mobile station 7 location is changed, the proximity is calculated between a home base station 3 with an identifier corresponding to an identifier of the mobile station 7 and the mobile station 7. The proximity as described above is shown as a distance between the mobile station 7 and the home base station 3. Moreover, the proximity may be shown using statistical values such as the average, median, probability density function, cumulative value, etc., of the distance between the mobile station 7 and the home base station 3 in a certain observation period.

Moreover, the upper-level node 1 may include a home base station radio unit status control instruction generating unit 126 which generates a radio unit terminating instruction for changing the status of the home base station 3 from the service status to the radio unit stop status, and a radio unit starting instruction for changing the status of the home base station 3 from the radio unit stop status to the service status. In the home base station radio unit status control instruction generating unit 126 are stored the radio unit statuses of the home base stations 3 that are received via the network interface unit 121 from the corresponding home base stations 3. The home base station radio unit status control instruction generating unit 126 receives, from the proximity calculating unit 125, the identifier of the home base station 3 and the corresponding proximities. If one or more of the proximities is within a predetermined value range and the radio unit of the home base station 3 is in the stop status, the radio unit start instruction is transmitted to the network interface unit 121. If the proximities of all the mobile stations 7 collated to the home base station 3 are outside the predetermined value range and the home base station 3 is in the service status, the radio unit stop instruction is transmitted to the network interface unit 121. The network interface unit 121 transmits, to the home base station 3 corresponding to the identifier, the radio unit start instruction or radio unit stop instruction.

In the meantime, in FIG. 3, the home base station 3 includes a network interface unit 301 which communicates with the upper-layer node 1 via a wired circuit.

Moreover, the home base station 3 includes a GPS receiver 302 which receives a GPS signal and a location information memory unit 303 which stores the location information. The macro base station 2 may be arranged to perform general positioning used in this type of mobile communications system using receive power level, etc., of a signal from the macro base station 2 that is received at the home base station 3, and report the location information to the home base station 3 via the upper-layer node 1. Furthermore, an address at which the home base station 3 is installed may be set as the location information of the home base station 3. In this way, in the home base station 3, even when the receive qualities of the signal from the macro base station 2 and the GPS signal are poor, the location information of the home base station 3 may be obtained.

Moreover, the home base station 3 includes a radio unit status control unit 304 which obtains, from the network interface unit 301, a radio unit status control instruction to change the status of the radio unit. When the radio unit status control unit 304 is in the radio unit stop status, it starts the radio unit when the radio unit start instruction is received. Furthermore, when the radio unit status control unit 304 is in the service status, it stops the radio unit when the radio unit stop instruction is received. Moreover, when the radio unit status is changed, the radio unit status control unit 304 reports the radio unit status to the network interface unit 301. The network interface unit 301 transmits the reported radio unit status to the upper-layer node 1 and the macro base station 2 via the wired circuit. Furthermore, not only when the radio unit status control instruction is obtained so that the radio unit status is changed, but also when the radio unit status is changed by the user or when the home base station 3 itself changes the radio unit status due to a failure which has occurred within the home base station 3 or a change in a communications environment, the radio unit status control unit 304 reports the radio unit status to the network interface unit 301. Furthermore, the radio unit status control unit 304 may report the radio unit status to the network interface unit 301 in response to a request from the upper-layer node 1 or the macro base station 2.

Moreover, the home base station 3 includes a unit 305 for receiving from the base station that receives a signal transmitted by the macro base station 2.

Furthermore, the home base station 3 includes a receive quality measuring unit 306 which obtains a signal from the unit 305 for receiving from the base station to measure the receive quality. The receive quality measuring unit 306 measures, by means of a general method used in this type of mobile communications system, signal to interference and noise ratio (SINR), propagation loss, and receive power of a known signal transmitted from the macro base station 2.

The radio unit status control unit 304 obtains the outcome of the receive quality measurement from the receive quality measuring unit 306, and, if the receive quality is poor, the base station status control according to the present invention is not performed, so that the radio unit status control unit 304 is arranged to be always in the service status. The above does not apply to the change of status of the home base station 3 due to a factor other than the base station status control of the present invention. Then, when the receive quality is poor, the radio unit status control unit 304 may send an instruction to the upper-layer node 1 and the macro base station 2 via the network interface unit 301 to stop the base station status control function of the home base station 3 at the upper-layer node 1. Here, the poor receive quality represents a receive quality such that communicating between the base station and the mobile station is difficult when the receive quality is similar in this type of mobile communications system. For example, this may be a receive quality for which an out-of-range indication is provided in a mobile station of this type of mobile communications systems. In this way, it is possible to avoid a problem such that a home base station 3 cannot be initiated when the mobile station 7 cannot communicate with the macro base station 2 or cannot receive the GPS. Moreover, even when the home base station 3 is always in the service status, when the receive quality of a signal from the macro base station 2 is poor in the home base station 3, this does not become a problem as radio wave interference provided to a surrounding macro base station 2 is small.

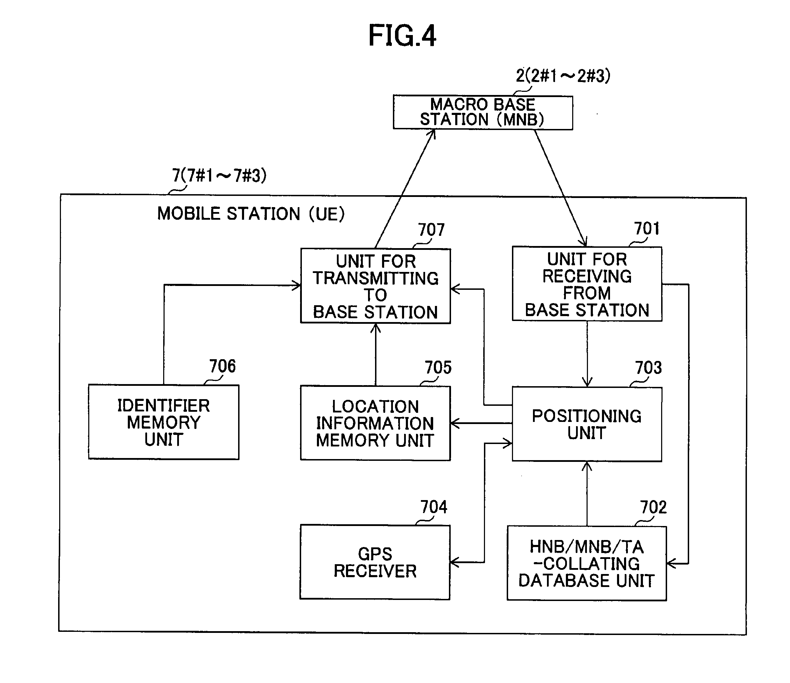

FIG. 4 is a diagram illustrating a configuration example of mobile stations 7. (7#1 through 7#3). In FIG. 4, the mobile station 7 includes a unit 701 for receiving from the base station that receives a signal from base stations (including both the macro base station 2 and the home base station 3).

Moreover, the mobile station 7 includes an HNB/MNB/TA-collating database unit 702, which is a database for collating the macro base station 2 with the home base station 3 to which the own apparatus is allowed to connect and collating the home base station 3 with location registration areas 6 (6#1-6#3) of the macro base station 2 collated with the home base station 3. The collating of the home base station 3 and the macro base station 2 is set in advance based on the radio wave measurement result and the geographical location, the HNB/MNB/TA-collating database unit 702 obtaining the above collating information from the upper-layer node 1 via the macro base station 2. Moreover, the HNB/MNB/TA-collating database unit 702 obtains, from the macro base station 2 via the unit 701 for receiving from the base station, collating of the home base station 3 with the location registration area 6 of the macro base station 2 collated with the home base station 3.

Furthermore, the mobile station 7 includes a positioning unit 703 which obtains location information. The location information of the mobile station 7 is obtained by means of a general method used in this type of mobile communications system (e.g., a positioning algorithm using an RTT of a signal transmitted by GPS or the base station). The positioning unit 703 may conduct positioning periodically. Moreover, the positioning unit 703 may conduct positioning periodically from the time of receiving an identifier of the location registration area 6 of the macro base station 2 collated with the home base station 3 in the HNB/MNB/TA-collating database unit 702. Furthermore, the positioning unit 703 may conduct positioning periodically from the time of receiving an identifier of the macro base station 2 collated with the home base station 3 in the HNB/MNB/TA-collating database unit 702. Moreover, the period for the positioning may be changed in accordance with the proximity. For example, positioning is conducted in a short period when the distance between the mobile station 7 and the home base station 3 is small, while positioning is conducted in a long period when the distance between the mobile station 7 and the home base station 3 is large. In this way, the power consumption of the mobile station 7 may be reduced. Moreover, the amount of signal transmission between the mobile station 7 and the upper-layer node 1, between the mobile station 7 and the macro base station 2, and between the upper-layer node 1 and the macro base station 2 may be reduced.

Furthermore, the mobile station 7 includes a GPS receiver 704 which receives a GPS signal. The GPS receiver 704 receives a GPS signal at a timing reported from the positioning unit 703, and transfers a demodulated GPS signal to the positioning unit 703.

Moreover, the mobile station 7 includes a location information memory unit 705 which stores location information of an own apparatus that is received from the positioning unit 703.

Furthermore, the mobile station 7 includes an identifier memory unit 706 which stores an identifier of the own apparatus. This identifier is used for the mobile communications network to identify the mobile station 7. Moreover, it is also used for collating with the home base station 3.

Furthermore, the mobile station 7 includes a unit 707 for transmitting to the base station that transmits a signal to the base station. The unit 707 for transmitting to the base station transmits, to the macro base station 2, a positioning instruction from the positioning unit 703. Moreover, after the location information is updated after the positioning, the location information of the own apparatus is received from the location information memory unit 705 and the received location information of the own apparatus is transmitted to the macro base station 2.

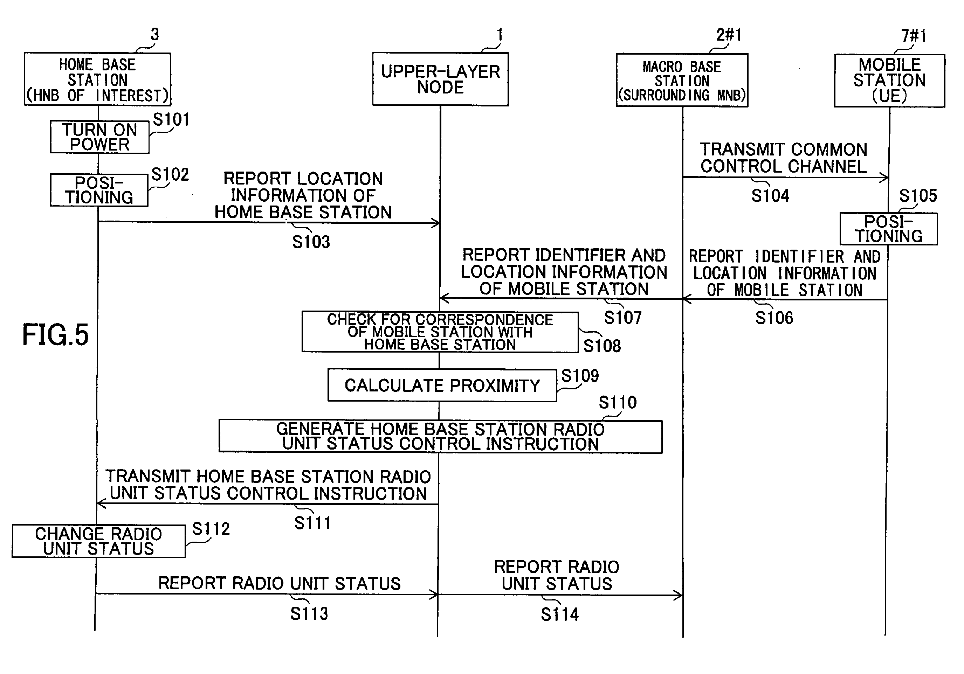

FIG. 5 is a sequence diagram illustrating an exemplary process in the first embodiment.

In FIG. 5, when the power is turned on at the home base station 3 (step S101), the home base station 3 measures the location of the own apparatus (step S102). Then, the home base station 3 transmits the location information of the own apparatus via the network to the upper-layer node 1 (step S103).

In the meantime, the macro base station 2#1 transmits a common control channel including a base station identifier and a location registration area identifier (step S104). The mobile station 7#1 conducts positioning of the own apparatus on a periodic basis (step S105). The positioning may be conducted periodically from the time of entering, from the location registration area 6#2, the location registration area 6#1 associated with the home base station 3 it is authorized to connect to. Moreover, the positioning may be conducted periodically from the time of entering, from the macro cell 4#2, the macro cell 4#1 associated with the home base station 3 it is authorized to connect to. The entries as described above are checked using the base station identifier and the location registration area identifier that are included in the common control channel transmitted by the macro base station 2.

Next, the mobile station 7#1 transmits, to the macro base station 2#1, the identifier and the location information of the own apparatus (step S106). The macro base station 2#1 transmits the identifier and the location information of the mobile station 7#1 via the network to the upper-layer node 1 (step S107).

The upper-layer node 1 checks for the home base station 3 which the received identifier of the mobile station 7#1 is authorized to connect to (step S108).

Next, the upper-layer node 1 calculates the proximity between the home base station 3 and the mobile station 7#1 for which the correspondence is checked (step S109). The proximity is shown as a distance between the mobile station 7#1 and the home base station 3. Moreover, the proximity may be shown using statistical values such as the average, median, probability density function, cumulative value, etc. of the distance between the mobile station 7#1 and the home base station 3 in a certain observation period.

Next, the upper-layer node 1 generates a home base station radio unit status control instruction based on the proximity (step S110). If the proximity is within a predetermined value range and the radio unit of the home base station 3 is in the stop status, the radio unit start instruction is generated. If the proximities of all the CSG mobile stations of the home base station 3 are outside the predetermined value range and the home base station 3 is in the service status, the radio unit stop instruction is generated. Then, the upper-layer node 1 transmits the home base station radio unit status control instruction to the home base station 3 (step S111).

Upon receiving the home base station radio unit status control instruction, if the instruction is a radio unit start instruction and the radio unit of the own apparatus is in the stop status, the home base station 3 starts the radio unit, while if the instruction is a radio unit stop instruction and the own apparatus is in the service status, the home base station 3 terminates the radio unit (step S112).

Moreover, when the radio unit status is changed, the home base station 3 transmits the radio unit status report via the wired circuit to the upper-layer node 1 (step S113). Furthermore, not only when the radio unit status control instruction is obtained so that the radio unit status is changed, but also when the radio unit status is changed by the user or when the home base station 3 itself changes the radio unit status due to a failure which has occurred within the home base station 3 or a change in the communications environment, the home base station 3 reports the radio unit status to the upper-layer node 1.

The upper-layer node 1 transmits, to the macro base station 2#1, the radio unit status report received from the home base station 3 (step S114). Moreover, the home base station 3 may transmit the radio unit status report to the upper-layer node 1 or the macro base station 2#1 in response to a request from the upper-layer node 1 or the macro base station 2#1.

In this way, as the home base station 3 is changed between the service status and the radio unit stop status depending on whether the CSG user of the home base station 3 is located in the surrounding cells of the home base station 3; when the user wishes to use it, a normal service provision is made possible, while, when there is no likelihood of the user using it, wasted power consumption is reduced and interference due to the common control channel is prevented.

### A second embodiment

In a second embodiment the mobile station has location information of the home base station. An overall configuration of the mobile communications system assumes what is shown in FIG. 1. Moreover, as the macro base station and the upper-level node, a general configuration used in this type of mobile communications system is assumed.

The second embodiment, in which the mobile station has location information of the home base station, makes it possible to calculate the proximity in the mobile station. Thus, it is not necessary that the location information of the mobile station to the upper-layer node be transmitted whenever the location information of the mobile station is updated. Thus, the amount of information of signals transmitted and received between the mobile station and the upper-layer node may be reduced.

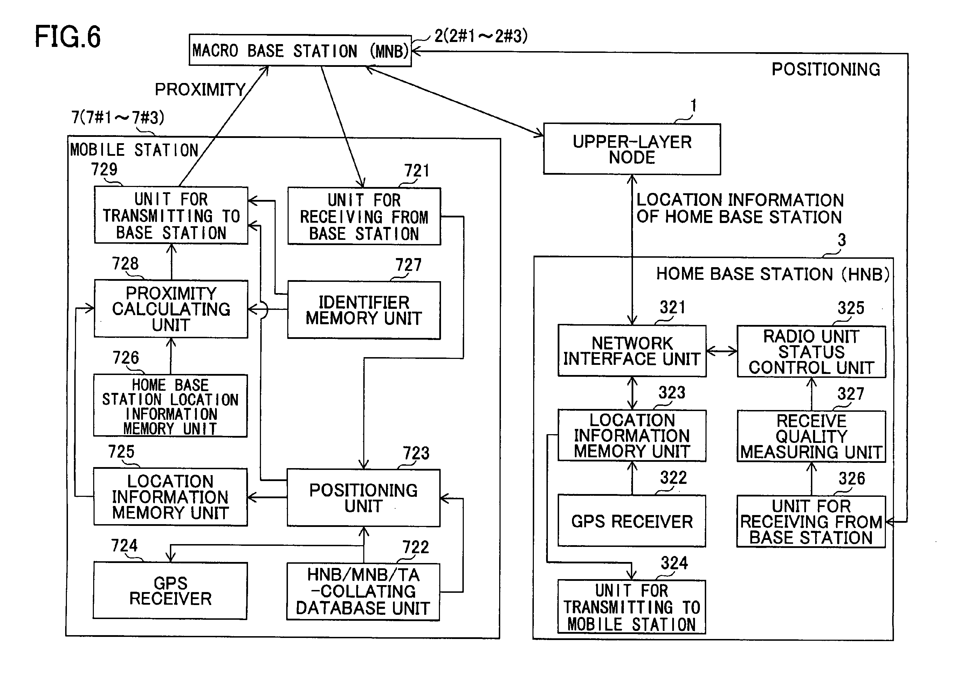

FIG. 6 is a diagram illustrating an exemplary configuration of mobile stations 7 (7#1 through 7#3) and the home base station 3 in the second embodiment.

In FIG. 6, the mobile station 7 includes a unit 721 for receiving from the base station that receives a signal from base stations (including both the macro base station 2 and the home base station 3).

Moreover, the mobile station 7 includes an HNB/MNB/TA-collating database unit 722, which is a database for collating the macro base station 2 with the home base station 3 to which the own apparatus is allowed to connect and collating the home base station 3 with location registration areas 6 (6#1-6#3) of the macro base station 2 collated with the home base station 3. The collating of the home base station 3 and the macro base station 2 is set in advance based on the radio wave measurement result and the geographical location, the HNB/MNB/TA-collating database unit 722 obtaining the above collating from the upper-layer node 1 via the macro base station 2. Moreover, the HNB/MNB/TA-collating database unit 722 obtains, from the macro base station 2 via the unit 721 for receiving from the base station, collating of the home base station 3 with the location registration area 6 of the macro base station 2 collated with the home base station 3.

Furthermore, the mobile station 7 includes a positioning unit 723 which obtains location information. The location information of the mobile station 7 is obtained by means of a general method used in this type of mobile communications system (e.g., a positioning algorithm using an RTT of a signal transmitted by GPS or the base station). The positioning unit 723 may conduct positioning periodically. Moreover, the positioning unit 723 may conduct positioning periodically from the time of receiving an identifier of the location registration area 6 of the macro base station 2 collated with the home base station 3 in the HNB/MNB/TA-collating database unit 722. Furthermore, the positioning unit 723 may conduct positioning periodically from the time of receiving, from the macro base station 2, an identifier of the macro base station 2 collated with the home base station 3 in the HNB/MNB/TA-collating database unit 722. Moreover, the period for the positioning may be changed in accordance with the proximity. For example, positioning is conducted in a short period when the distance between the mobile station 7 and the home base station 3 is small, while positioning is conducted in a long period when the distance between the mobile station 7 and the home base station 3 is large. In this way, the power consumption of the mobile station 7 may be decreased. Moreover, the amount of signal transmission between the mobile station 7 and the upper-layer node 1, between the mobile station 7 and the macro base station 2, and between the upper-layer node 1 and the macro base station 2 may be reduced.

Furthermore, the mobile station 7 includes a GPS receiver 724 which receives a GPS signal. The GPS receiver 724 receives a GPS signal at a timing reported from the positioning unit 723, and transfers a demodulated GPS signal to the positioning unit 723.

Moreover, the mobile station 7 includes a location information memory unit 725 which stores location information of an own apparatus that is received from the positioning unit 723.

Furthermore, the mobile station 7 includes a home base station location information memory unit 726 which obtains location information and an identifier of the home base station 3 that are obtained in a positioning server arranged in the home base station 3 or the network, and stores the obtained location information and identifier. The location information of the home base station 3 may be obtained by the home base station 3 transmitting location information and the mobile station 7 receiving the same when the mobile station 7 is visiting an area covered by the home base station 3. Moreover, the location information of the home base station 3 may be obtained from the home base station 3 using a non-contact type smart card mounted on the mobile station 7. Furthermore, the location information of the home base station 3 may be obtained by the user entering the information into the mobile station 7. Moreover, the location information of the home base station 3 may be obtained from the upper-layer node 1 via the network.

Furthermore, the mobile station 7 includes an identifier memory unit 727 which stores an identifier of an own apparatus. This identifier is used for the mobile communications network to identify the mobile station 7. Moreover, it is also used for collating with the home base station 3.

Furthermore, the mobile station 7 includes a proximity calculating unit 728 which calculates the proximity of the own apparatus and the home base station 3 based on an own apparatus location received from the location information memory unit 725 and a home base station location received from the home base station location information memory unit 726. The proximity calculating unit 728 receives an identifier of the own apparatus from the identifier memory unit 727. The proximity calculating unit 728 receives an identifier of the home base station 3 from the home base station location information memory unit 726. When the location of the own apparatus is changed, the proximity is calculated between the own apparatus and a home base station 3 with an identifier corresponding to an identifier of the own apparatus. The proximity as described above is shown as a distance between the own apparatus and the home base station 3. Moreover, the proximity may be shown using statistical values such as the average, median, probability density function, cumulative value, etc., of the distance between the own apparatus and the home base station 3 in a certain observation period.

Furthermore, the mobile station 7 includes a unit 729 for transmitting to the base station that transmits a signal to the base station. When the home base station 3 is in a radio unit stop status and the proximity is within a predetermined value range, or when the home base station 3 is in a service status and the proximity is outside the predetermined value range, the unit 729 for transmitting to the base station transmits the proximity received from the proximity calculating unit 728 to the macro base station 2. The unit 729 for transmitting to the base station transmits, to the macro base station 2, a positioning instruction from the positioning unit 723.

In the meantime, in FIG. 6, the home base station 3 includes a network interface unit 321 which communicates with the upper-layer node 1 via a wired circuit.

Moreover, the home base station 3 includes a GPS receiver 322 which receives a GPS signal and a location information memory unit 323 which stores the location information. The macro base station 2 may be arranged to perform general positioning used in this type of mobile communications system using receive power level, etc., of a signal from the macro base station 2 that is received at the home base station 3, and report the location information to the home base station 3 via the upper-layer node 1. Moreover, an address at which the home base station 3 is installed may be set as the location information of the home base station 3. In this way, in the home base station 3, even when the receive qualities of the signal from the macro base station 2 and the GPS signal are poor, the location information of the home base station 3 may be obtained.

Moreover, the home base station 3 includes a radio unit status control unit 325 which changes the radio unit status. The radio unit status control unit 325 obtains, from the network interface unit 321 via the upper-layer node 1, the proximities between the own apparatus and all CSG mobile stations which are authorized to connect to the own apparatus and stores the obtained proximities. When the proximity with at least one CSG mobile station 7 is within the predetermined value range and the radio unit of the own apparatus is in a stop status, the radio unit status control unit 325 starts the radio unit. When proximities with all CSG mobile stations 7 are outside the predetermined value range and the own apparatus is in a service status, the radio unit is terminated. Moreover, when the radio unit status is changed, the radio unit status control unit 325 reports the radio unit status to the network interface unit 321. The network interface unit 321 transmits the reported radio unit status to the upper-layer node 1 and the macro base station 2 via the wired circuit. The upper-layer node 1 reports, to the mobile station 7, the reported radio unit status via the base station visited by the mobile station 7 as is generally done in this type of mobile communications system. Moreover, not only when the radio unit status control instruction is obtained so that the radio unit status is changed, but also when the radio unit status is changed by the user or when the home base station 3 itself changes the radio unit status due to a failure which has occurred within the home base station 3 or change in the communications environment, the radio unit status control unit 325 reports the radio unit status to the network interface unit 321. Furthermore, the radio unit status control unit 325 may report the radio unit status to the network interface unit 321 in response to a request from the mobile station 7 or the macro base station 2 or the upper-layer node 1.

Moreover, the home base station 3 includes a unit 326 for receiving from the base station that receives a signal transmitted by the macro base station 2.

Furthermore, the home base station 3 includes a receive quality measuring unit 327 which obtains a signal from the unit 326 for receiving from the base station to measure the receive quality. The receive quality measuring unit 327 measures, by means of a general method used in this type of mobile communications system, signal to interference and noise ratio (SINR), propagation loss, and receive power of a known signal transmitted from the macro base station 2.

The radio unit status control unit 325 obtains the outcome of the receive quality measurement from the receive quality measuring unit 327, and, if the receive quality is poor, the base station status control according to the present invention is not performed, so that the radio unit status control unit 304 is arranged to be always in the service status. The above does not apply to the change of status of the home base station 3 due to a factor other than the base station status control of the present invention. Then, when the receive quality is poor, the radio unit status control unit 325 transmits, to the mobile station 7 and the macro base station 2, a report to stop the base station status control function. The report as described above may be transmitted by the home base station 3 to the mobile station 7 when the mobile station 7 visits an area covered by the home base station 3. Moreover, the report as described above may be transmitted to the macro base station 2 via the network and further by the macro base station 2 to the mobile station 7. Here, the poor receive quality represents a receive quality such that communicating between the base station and the mobile station is difficult when the receive quality is similar in this type of mobile communications system mobile station. For example, this may be a receive quality for which an out-of-range indication is provided in this type of mobile communications system mobile station. In this way, it is possible to avoid a problem such that a home base station 3 cannot be initiated when the mobile station 7 cannot communicate with the macro base station 2 or cannot receive the GPS. Moreover, even when the home base station 3 is always in the service status, when receive quality of a signal from the macro base station 2 is poor in the home base station 3, this does not become a problem as radio wave interference provided to a surrounding macro base station 2 is small.

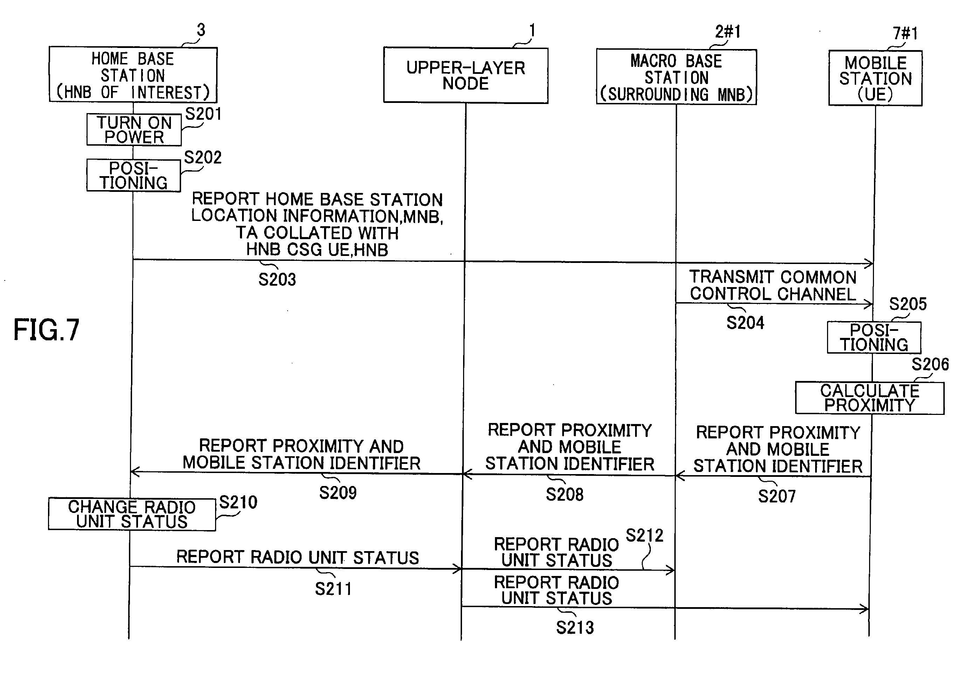

FIG. 7 is a sequence diagram illustrating an exemplary process in the second embodiment.

In FIG. 7, when the power is turned on at the home base station 3 (step S201), the home base station 3 measures the location of the own apparatus (step S202). Then, the home base station 3 reports, to the mobile station 7#1, location information of the own apparatus, an identifier of a mobile station of a CSG of the own apparatus, a macro base station collated with the own apparatus , and a location registration area (step S203). These information sets may be reported by means of the home base station 3 transmitting the information sets and the mobile station 7#1 receiving the information sets when the mobile station 7#1 visits an area covered by the home base station 3. Moreover, these information sets may be reported using a non-contact type smart card installed at the mobile station 7#1. Furthermore, the user may enter these information sets into the mobile station 7#1 for the mobile station 7#1 to obtain these information sets. Moreover, these information sets may be reported from the upper-layer node 1 via the network.

In the meantime, the macro base station 2#1 transmits a common control channel including a base station identifier and a location registration area identifier (step S204). The mobile station 7#1 conducts positioning of own apparatus on a periodic basis (step S205). The positioning may be conducted periodically from the time of entering, from the location registration area 6#2, the location registration area 6#1 associated with the home base station 3 the mobile station 7#1 is authorized to connect to. Moreover, the positioning may be conducted periodically from the time of entering, from the macro cell 4#2, the macro cell 4#1 associated with the home base station 3 the mobile station 7#1 is authorized to connect to. The entries as described above are checked for using the base station identifier and the location registration area identifier that are included in the common control channel transmitted by the macro base station 2.

Next, the mobile station 7#1 calculates the proximity between the own apparatus and the home base station 3 the mobile station 7#1 is authorized to connect to (step S206) . The proximity is shown as a distance between the mobile station 7#1 and the home base station 3. Moreover, the proximity may be shown using statistical values such as the average, median, probability density function, cumulative value, etc. of the distance between the mobile station 7#1 and the home base station 3 in a certain observation period. Then, the mobile station 7#1 transmits, to the macro base station 2#1, the identifier of the own apparatus and the proximity (step S207). The macro base station 2#1 transmits the identifier of the mobile station 7#1 and the proximity via the network to the upper-layer node 1 (step S208). The upper-layer node 1 transmits the identifier of the mobile station 7#1 and the proximity via the network to the home base station 3 (step S209). The macro base station 2#1 may directly transmit the identifier of the mobile station 7#1 and the proximity via the network to the home base station 3.

When the proximity with at least one CSG mobile station 7 is within a predetermined value range and the radio unit of the own apparatus is in a stop status, the home base station 3 starts the radio unit. Moreover, when the proximities with all the CSG mobile stations 7 are outside the predetermined value range and the own apparatus is in a service status, the home base station terminates the radio unit (step S210).

Furthermore, when the radio unit status is changed, the home base station 3 transmits the radio unit status report via the wired circuit to the upper-layer node 1 (step S211). The upper-layer node 1 transmits, to the macro base station 2#1, the radio unit status report received from the home base station 3 (step S212). The upper-layer node 1 reports, to the mobile station 7#1, the reported radio unit status via the base station visited by the mobile station 7#1 as is generally done in this type of mobile communications system (step S213). Moreover, the home base station 3 may transmit the radio unit status report to the mobile station 7#1 or the macro base station 2#1 or the upper-layer node 1 in response to a request from the mobile station 7#1 or the macro base station 2#1 or the upper-layer node 1.

In this way, the mobile station 7 having the location information of the home base station 3 makes it possible to calculate the proximity in the mobile station 7. Thus, it is not necessary that the location information of the mobile station 7 be transmitted to the upper-layer node 1 whenever the location information of the mobile station 7 is updated. Thus, the amount of information of signals transmitted and received between the mobile station 7 and the upper-layer node 1 may be reduced.

### Recapitulation

As described above, the embodiments of the present invention have the following advantages:
(1) Only home base stations with a likelihood of being used may be initiated, making it possible to reduce power consumption.
(2) Transmission at home base stations with no likelihood of being used may be prevented entirely, making it possible to reduce interference to other cells.
(3) The status of the home base station may be automatically controlled, making it possible to reduce the burden on the operations manager.

The present invention has been described in the foregoing according to preferred embodiments of the present invention. While specific examples have been shown to describe the present invention, it is evident that various modifications and changes may be applied thereto without departing from broader spirits and scope of the present invention as defined in the claims. In other words, the present invention should not be construed to be limited by the details of the specific examples and the attached drawings.

The present international application claims priority based on Japanese Patent Application No. 2007-211094 filed on August 13, 2007, the entire contents of which are hereby incorporated by reference.

## Claims

1. A mobile communications system, comprising:
a unit which is provided at an upper-layer node apparatus and which obtains location information of a base station apparatus and one or more mobile station apparatuses;
a unit which is provided at the upper-layer node apparatus and which checks whether the mobile station apparatus is authorized to connect to the base station apparatus;
a unit which is provided at the upper-layer node apparatus and which calculates a proximity of the base station apparatus and the mobile station apparatus based on the location information of the base station apparatus and the mobile station apparatus; and
a unit which is provided at the upper-layer node apparatus and which moves the base station apparatus to a service status when the base station apparatus and the mobile station apparatus are in proximity and moves the base station apparatus to a radio unit stop status when all the mobile station apparatuses are not in proximity with the base station apparatus.

2. An upper-layer node apparatus, comprising: a unit which obtains location information of a base station apparatus and location information of one or more mobile station apparatuses;
a unit which checks whether the mobile station apparatus is authorized to connect to the base station apparatus;
a unit which calculates a proximity of the base station apparatus and the mobile station apparatus based on the location information; and
a unit which moves the base station apparatus to a service status when the base station apparatus and the mobile station apparatus are in proximity and moves the base station apparatus to a radio unit stop status when all the mobile station apparatuses are not in proximity with the base station apparatus.

3. A base station apparatus, comprising:
a unit which obtains location information of an own apparatus;
a unit which transmits an identifier and the location information of the own apparatus to an upper-layer node apparatus; and
a unit which moves the own apparatus between a service status and a radio unit stop status in response to an instruction from the upper-layer node apparatus.

4. A mobile station apparatus, comprising:
a unit which obtains location information of an own apparatus;
a unit which, when the own apparatus enters a location registration area associated with a specific base station apparatus the mobile station apparatus is authorized to connect to or an area covered by a base station apparatus associated with the specific base station apparatus the mobile station apparatus is authorized to connect to, initiates the unit which obtains the location information; and
a unit which transmits an identifier and the location information of the own apparatus to the base station apparatus.

5. A mobile communications system, comprising:
a unit which is provided at one or more mobile station apparatuses and which obtains location information of an own apparatus and a base station apparatus;
a unit which is provided at the mobile station apparatus and which calculates a proximity of the base station apparatus and the mobile station apparatus based on the location information;
a unit which is provided at the mobile station apparatus and which transmits the proximity to the base station apparatus; and
a unit which is provided at the base station apparatus and which moves an own apparatus to a service status when the own apparatus and the mobile station apparatus are in proximity and moves a radio unit of the own apparatus to a stop status when all of the mobile station apparatuses authorized to connect to the own apparatus are not in proximity with the own apparatus.

6. A mobile station apparatus, comprising:
a unit which obtains location information of an own apparatus and a specific base station apparatus the mobile station apparatus is authorized to connect to;
a unit which calculates a proximity of the base station apparatus and the own apparatus based on the location information; and
a unit which is provided at the mobile station apparatus and which transmits the proximity to the base station apparatus.

7. The mobile station as claimed in claim 6, further comprising a unit which, when the own apparatus enters a location registration area associated with the specific base station apparatus the mobile station is authorized to connect to or an area covered by a base station apparatus associated with the specific base station apparatus the mobile station is authorized to connect to, initiates the unit which obtains the location information.

8. A base station apparatus, comprising: a unit which obtains location information of an own apparatus to transmit the obtained location information to one or more mobile station apparatuses;
a unit for obtaining a proximity from the mobile station apparatus; and
a unit which moves the own apparatus to a service status when the own apparatus and the mobile station apparatus are in proximity and moves a radio unit of the own apparatus to a stop status when all of the mobile station apparatuses authorized to connect to the own apparatus are not in proximity with the own apparatus.

9. The base station apparatus as claimed in claim 3 or 8, further comprising:
a unit which measures a receive quality of a signal from another base station apparatus; and
a unit which always sets the own apparatus to a service status when the receive quality is no more than a threshold value.

10. A method of controlling base station status, comprising the steps of:
obtaining, at an upper-layer node apparatus, location information of a base station apparatus and one or more mobile station apparatuses;
checking, at the upper-layer node apparatus, whether the mobile station apparatus is authorized to connect to the base station apparatus;
calculating, at the upper-layer node apparatus, a proximity of the base station apparatus and the mobile station apparatus based on the location information of the base station apparatus and the mobile station apparatus; and
at the upper-layer node apparatus, moving the base station apparatus to a service status when the base station apparatus and the mobile station apparatus are in proximity and moving the base station apparatus to a radio unit stop status when all the mobile station apparatuses are not in proximity with the base station apparatus.

11. A method of controlling base station status, comprising the steps of:
obtaining, at one or more mobile station apparatuses, location information of a base station apparatus and an own apparatus;
calculating, at the mobile station apparatus, a proximity of the base station apparatus and the mobile station apparatus based on the location information;
transmitting, at the mobile station apparatus, the proximity to the base station apparatus; and
at the base station apparatus, moving an own apparatus to a service status when the own apparatus and the mobile station apparatus are in proximity and moving a radio unit of the own apparatus to a stop status when all of the mobile station apparatuses authorized to connect to the own apparatus are not in proximity with the own apparatus.
